# EUROPEAN PATENT SPECIFICATION

(11) **EP 4 088 962 B1**
(45) Date of publication and mention of the grant of the patent: **19.06.2024**
(21) Application number: 20959316.9
(22) Date of filing: 31.10.2020
(51) Int. Cl.: B60L 1/00, B60H 1/32, B60K 1/00

(54) **ELECTRIC AUTOMOBILE DRIVING SYSTEM AND ELECTRIC AUTOMOBILE**
ANTRIEBSSYSTEM FÜR ELEKTRISCHES KRAFTFAHRZEUG UND ELEKTRISCHES KRAFTFAHRZEUG
SYSTÈME D'ENTRAÎNEMENT D'AUTOMOBILE ÉLECTRIQUE ET AUTOMOBILE ÉLECTRIQUE

(43) Date of publication of application: 16.11.2022
(73) Proprietor: Huawei Digital Power Technologies Co., Ltd., Shenzhen, Guangdong 518043 (CN)
(72) Inventor: HU, Xiong, Shenzhen, Guangdong 518129 (CN); TANG, Zhengyi, Shenzhen, Guangdong 518129 (CN); ZHONG, Hu, Shenzhen, Guangdong 518129 (CN); MEI, Xueyu, Shenzhen, Guangdong 518129 (CN); WANG, Huan, Shenzhen, Guangdong 518129 (CN); WANG, Yanzhong, Shenzhen, Guangdong 518129 (CN)
(74) Representative: Maiwald GmbH
(86) International application number: PCT/CN2020/125674
(87) International publication number: WO 2022/088155

(56) References cited:
- WO-A1-2020/030228
- CN-A- 102 390 260
- CN-A- 109 398 059
- CN-A- 109 398 059
- CN-U- 209 126 501
- DE-A1-102012 214 200
- DE-A1-102018 119 484
- US-A1- 2012 247 269
- US-A1- 2013 006 460

## Description

### TECHNICAL FIELD

This invention relates to the field of vehicle technologies, and specifically, to an electric vehicle drive system and an electric vehicle.

### BACKGROUND

With the increasing prominence of energy and environmental issues in recent years, a vehicle using fuel as energy is subject to specific restrictions and impact. An electric vehicle uses a battery, a drive motor, and a transmission together as a power source. Compared with the conventional fuel vehicle, the electric vehicle has many advantages such as energy saving, low pollution, and high efficiency, and therefore is rapidly developed in recent years.

To improve riding comfort, an air conditioner has become an indispensable part of a vehicle. However, to configure an air conditioner in the electric vehicle, a drive motor needs to be separately configured for the air conditioner. The drive motor occupies a part of vehicle space, causing a decrease in available space for a passenger and also causing an increase in costs of the electric vehicle.

WO 2020/030228 A1 describes an electromechanical drive arrangement for a motor vehicle.

US 2013/006460 A1 describes an electric automobile that achieves an enhanced motor efficiency in a normal travel range.

CN 109 398 059 A describes an integrated electric drive system for electric vehicles.

DE 10 2018 119484 A1 describes an electromechanical drive arrangement for a motor vehicle.

US 2012/147269 A1 describes a drive device for an electric vehicle with two electric rotatable machines.

### SUMMARY

This invention provides an electric vehicle drive system and an electric vehicle, so that a powertrain in the electric vehicle drive system can also drive an air-conditioner compressor inside the vehicle when driving the electric vehicle to travel, to reduce a quantity of components inside the electric vehicle, thereby reducing space occupancy and costs.

The present invention is defined by the subject-matter of the independent claims. Additional features of the invention are presented in the dependent claims.

According to a first aspect, an embodiment of this invention provides an electric vehicle drive system, including a powertrain and a transmission system. The powertrain includes a first power output mechanism and a second power output mechanism, the first power output mechanism is connected to one end of the transmission system, and the other end of the transmission system is configured to be connected to an air-conditioner compressor. The first power output mechanism is configured to drive, through the transmission system, the air-conditioner compressor to work. The second power output mechanism is configured to drive a vehicle to travel. Specifically, when the powertrain drives the electric vehicle, a part of power of the powertrain may also be transmitted to the air-conditioner compressor, to drive the air-conditioner compressor to work. Therefore, no drive motor needs to be separately disposed in the electric vehicle for the air-conditioner compressor, thereby saving space inside the electric vehicle and reducing costs of the electric vehicle.

In an embodiment of this invention, the powertrain may include a drive motor and a transmission, the transmission includes an input shaft, a countershaft, and an output axle shaft, and the input shaft, the countershaft, and the output axle shaft are in transmission connection. One end of the input shaft is connected to the drive motor. The first power output mechanism may be the input shaft and the output shaft that are disposed in the transmission, and the second power output mechanism includes the output axle shaft. The transmission system includes two connection mechanisms and one transmission mechanism. In the two connection mechanisms, one end of one connection mechanism is connected to the input shaft of the transmission, the other end of the connection mechanism is connected to the transmission mechanism, one end of the other connection mechanism is connected to the countershaft of the transmission, and the other end of the other connection mechanism is connected to the transmission mechanism. The transmission mechanism is configured to be connected to the air-conditioner compressor, to transmit power from the powertrain to the air-conditioner compressor.

In a possible implementation, both the two connection mechanisms may be two-way clutches, and the transmission mechanism may be a gear transmission mechanism. In this case, when the electric vehicle is in a forward state or the electric vehicle is in a parked state, the powertrain can drive, through the two two-way clutches and the gear transmission mechanism, the air-conditioner compressor to work.

In another possible implementation, in the two connection mechanisms, the connection mechanism connected to the input shaft may be a one-way clutch, and the connection mechanism connected to the countershaft may be a two-way clutch; and the transmission mechanism may be a belt transmission mechanism. In this case, when the electric vehicle is in a forward state, a reverse state, or a parked state, the powertrain can drive, through the one-way clutch, the two-way clutch, and the belt transmission mechanism, the air-conditioner compressor to work. In this way, an air conditioner can be turned on when the electric vehicle is in any state.

In still another possible implementation, in the two connection mechanisms, the connection mechanism connected to the input shaft may be a one-way clutch, and the connection mechanism connected to the countershaft may be an integral shaft; and the transmission mechanism may be a belt transmission mechanism. In this case, when the electric vehicle is in a forward state, a reverse state, or a parked state, the powertrain can drive, through the one-way clutch, the integral shaft, and the belt transmission mechanism, the air-conditioner compressor to work. In this way, an air conditioner can be turned on when the electric vehicle is in any state.

It should be noted that in a process of enabling the air-conditioner compressor to work, the one-way clutch is disengaged or engaged based on a rotational direction of the input shaft, and the two-way clutch and the belt transmission mechanism need to be disengaged or engaged based on a traveling status of the electric vehicle. In addition, when the transmission system includes the two connection mechanisms and the transmission mechanism, the two connection mechanisms may be alternatively buttons, slides, or synchros, and the transmission mechanism may be alternatively a chain transmission mechanism. Enumeration is not performed herein.

In an embodiment of this invention, the powertrain may include a drive motor and a transmission, the transmission includes an input shaft, a countershaft, and an output axle shaft, and the input shaft, the countershaft, and the output axle shaft are in transmission connection. One end of the input shaft is connected to the drive motor. The first power output mechanism may include the input shaft or the countershaft that is disposed in the transmission, and the second power output mechanism includes the output axle shaft. The transmission system may include one connection mechanism and one transmission mechanism, one end of the connection mechanism is connected to the input shaft or the countershaft of the transmission, and the other end of the connection mechanism is connected to the transmission mechanism. The transmission mechanism is configured to be connected to the air-conditioner compressor, to transmit power from the powertrain to the air-conditioner compressor.

In a possible implementation, in the transmission system, the connection mechanism is a two-way clutch, and the transmission mechanism is a belt transmission mechanism. In this case, one end of the two-way clutch is connected to the input shaft or the countershaft, the other end of the two-way clutch is connected to the belt transmission mechanism, and the belt transmission mechanism is configured to be connected to the air-conditioner compressor. In this way, when the electric vehicle is in a forward state or the electric vehicle is in a parked state, the powertrain can drive, through the two-way clutch and the belt transmission mechanism, the air-conditioner compressor to work.

In an embodiment of this invention, the powertrain may include a drive motor and a transmission, the transmission includes an input shaft, a countershaft, and an output axle shaft, and the input shaft, the countershaft, and the output axle shaft are in transmission connection. One end of the input shaft is connected to the drive motor. The first power output mechanism may include the input shaft or the countershaft that is disposed in the transmission, and the second power output mechanism includes the output axle shaft. The transmission system may include one connection mechanism and one transmission mechanism. One end of the transmission mechanism is connected to the input shaft or the countershaft of the transmission, and the other end of the transmission mechanism is connected to the connection mechanism. The connection mechanism is configured to be connected to the air-conditioner compressor, to transmit power from the powertrain to the air-conditioner compressor.

In a possible implementation, in the transmission system, the connection mechanism is a two-way clutch, and the transmission mechanism is a belt transmission mechanism. In this case, one end of the belt transmission mechanism may be connected to the input shaft or the countershaft, the other end of the belt transmission mechanism is connected to the two-way clutch, and the two-way clutch is configured to be connected to the air-conditioner compressor. In this way, when the electric vehicle is in a forward state or the electric vehicle is in a parked state, the powertrain can drive, through the two-way clutch and the belt transmission mechanism, the air-conditioner compressor to work.

It should be noted that when the transmission system includes the connection mechanism and the transmission mechanism, the connection mechanism may be alternatively an integral shaft, a button, a slide, a one-way clutch, or a synchro, and the transmission mechanism may be alternatively a gear transmission mechanism or a chain transmission mechanism. Enumeration is not performed herein.

In an embodiment of this invention, the powertrain may include a drive motor and a transmission, the transmission includes an input shaft, a countershaft, and an output axle shaft, and the input shaft, the countershaft, and the output axle shaft are in transmission connection. One end of the input shaft is connected to the drive motor. The first power output mechanism may include the input shaft or the countershaft that is disposed in the transmission, and the second power output mechanism includes the output axle shaft. The transmission system may include one connection mechanism. One end of the connection mechanism is connected to the input shaft or the countershaft of the transmission, and the other end of the connection mechanism is configured to be connected to the air-conditioner compressor, to transmit power from the powertrain to the air-conditioner compressor.

In a possible implementation, the connection mechanism in the transmission system is a two-way clutch, one end of the two-way clutch is connected to the countershaft of the transmission, and the other end of the two-way clutch is configured to be connected to the air-conditioner compressor. In this way, when the electric vehicle is in a forward state or the electric vehicle is in a parked state, the powertrain can drive, through the two-way clutch, the air-conditioner compressor to work.

In an embodiment of this invention, the powertrain may include a drive motor and a transmission, the transmission includes an input shaft, a countershaft, and an output axle shaft, and the input shaft, the countershaft, and the output axle shaft are in transmission connection. One end of the input shaft is connected to the drive motor. The first power output mechanism may include the input shaft or the countershaft that is disposed in the transmission, and the second power output mechanism includes the output axle shaft. The transmission system may include one transmission mechanism, and the first power output mechanism may be the input shaft or the countershaft that is disposed in the transmission. One end of the transmission mechanism is connected to the input shaft or the countershaft of the transmission, and the other end of the transmission mechanism is configured to be connected to the air-conditioner compressor, to transmit power from the powertrain to the air-conditioner compressor.

In a possible implementation, the transmission mechanism in the transmission system is a belt transmission mechanism, one end of the belt transmission mechanism is connected to the input shaft or the countershaft of the transmission, and the other end of the belt transmission mechanism is configured to be connected to the air-conditioner compressor. In this way, when the electric vehicle is in a forward state or the electric vehicle is in a parked state, the powertrain can drive, through the belt transmission mechanism (disconnectable), the air-conditioner compressor to work.

It should be noted that when the transmission system includes the connection mechanism or the transmission mechanism, the connection mechanism may be alternatively an integral shaft, a button, a slide, a one-way clutch, or a synchro, and the transmission mechanism may be alternatively a gear transmission mechanism or a chain transmission mechanism. Enumeration is not performed herein.

In an embodiment of this invention, the powertrain further includes a drive motor and a transmission, the transmission includes an input shaft and an output axle shaft, and one end of the input shaft is connected to the drive motor. The second power output mechanism includes the output axle shaft. The drive motor may be a dual output shaft motor, and the transmission system may include one connection mechanism. One output shaft of the dual output shaft motor is connected to the transmission, and the other output shaft of the dual output shaft motor is connected to the connection mechanism. The first power output mechanism includes the other output shaft of the dual output shaft motor, and the other end of the connection mechanism is configured to be connected to the air-conditioner compressor. In this way, the connection mechanism can transmit power from the powertrain to the air-conditioner compressor.

In a possible implementation, the connection mechanism may be one of a slide connection, a clutch, a synchro, or a belt transmission connection (disconnectable).

In the foregoing embodiments, the transmission may be specifically one of a single-speed transmission, a two-speed transmission, or a multi-speed transmission. A neutral gear mechanism is disposed on the transmission, and the neutral gear mechanism is disposed on the input shaft, the countershaft, the output shaft, or a differential assembly in the transmission. When the transmission system includes one connection mechanism or one transmission mechanism and the transmission is a single-speed transmission, the neutral gear mechanism may be a synchro disposed on the input shaft, the neutral gear mechanism may be a clutch disposed on the countershaft, or the neutral gear mechanism may be a clutch or a synchro disposed on the output shaft or the differential assembly.

According to a second aspect, this invention further provides an electric vehicle. The electric vehicle has the electric vehicle drive system in any one of the solutions in the first aspect. When driving the electric vehicle to travel, a powertrain in this electric vehicle can also drive an air-conditioner compressor in the vehicle to work, thereby reducing power consumption of the electric vehicle. In addition, no motor needs to be separately configured for the air-conditioner compressor, thereby saving space inside the electric vehicle.

### BRIEF DESCRIPTION OF DRAWINGS

FIG. 1 is a schematic diagram of an overall structure of an electric vehicle drive system according to an embodiment of this invention;
FIG. 2 is a schematic diagram of a structure in which a transmission system in an electric vehicle drive system includes two connection mechanisms according to an embodiment of this invention;
FIG. 3 is a schematic diagram of a structure in which both the two connection mechanisms in FIG. 2 are two-way clutches;
FIG. 4 is a schematic diagram of a structure in which the two connection mechanisms in FIG. 2 are respectively a one-way clutch and a two-way clutch;
FIG. 5 is a schematic diagram of a structure in which the two connection mechanisms in FIG. 2 are respectively a one-way clutch and an integral shaft;
FIG. 6 is a schematic diagram of a structure in which a transmission system in an electric vehicle drive system includes one transmission mechanism and one connection mechanism connected to an input shaft of a transmission according to an embodiment of this invention;
FIG. 7 is a schematic diagram of a structure in which a transmission system in an electric vehicle drive system includes one connection mechanism and one transmission mechanism connected to a countershaft of a transmission according to an embodiment of this invention;
FIG. 8 is a schematic diagram of a structure in which the transmission mechanism in FIG. 6 is a belt transmission mechanism and the connection mechanism in FIG. 6 is a two-way clutch;
FIG. 9 is a schematic diagram of a structure in which the transmission mechanism in FIG. 7 is a belt transmission mechanism and the connection mechanism in FIG. 7 is a two-way clutch;
FIG. 10 is a schematic diagram of a structure in which a transmission system in an electric vehicle drive system includes one connection mechanism according to an embodiment of this invention;
FIG. 11 is a schematic diagram of a structure in which a transmission system in an electric vehicle drive system includes one transmission mechanism according to an embodiment of this invention;
FIG. 12 is a schematic diagram of a structure in which the connection mechanism in FIG. 10 is a two-way clutch;
FIG. 13 is a schematic diagram of a structure in which the transmission mechanism in FIG. 11 is a belt transmission mechanism;
FIG. 14 is a schematic diagram of a structure in which a drive motor in an electric vehicle drive system is a dual output shaft motor and a transmission system includes one connection mechanism according to an embodiment of this invention; and
FIG. 15 is a schematic diagram of a structure in which the connection mechanism in FIG. 14 is a two-way clutch.

### Reference numerals:

1-powertrain; 10-drive motor; 11-transmission; 110-output axle shaft; 2-transmission system; 20, 20a, and 20b-connection mechanism; 21-transmission mechanism; 3-air-conditioner compressor; 4-first power output mechanism; 40-input shaft; 41-countershaft.

### DESCRIPTION OF EMBODIMENTS

To make the objectives, technical solutions, and advantages of this invention clearer, the following further describes this invention in detail with reference to the accompanying drawings.

Terms used in the following embodiments are merely intended to describe specific embodiments, but are not intended to limit this invention. As used in the specification and appended claims of the invention, singular expressions "one", "a", "the", "the foregoing", "this", and "the one" are also intended to include expressions such as "one or more", unless the contrary is clearly indicated in its context.

Reference to "one embodiment" or "some embodiments" described in this specification or the like means that one or more embodiments of this invention include a particular feature, structure, or characteristic described in combination with the embodiment. Thus, phrases "in one embodiment", "in some embodiments", "in some other embodiments", "in some additional embodiments", and the like that appear in different parts in this specification do not necessarily mean referring to a same embodiment, but mean "one or more embodiments, but not all embodiments", unless otherwise specifically emphasized. The terms "include", "contain", "have", and their variants all mean "include but are not limited to", unless otherwise specifically emphasized.

With the development of an electric vehicle, requirements for comfort and endurance mileage of the electric vehicle are increasingly high, and disposition of an air conditioner is an important manifestation of comfort. However, when an air conditioner is disposed inside the electric vehicle, a drive motor configured to drive an air-conditioner compressor needs to be separately disposed. The drive motor occupies a part of space inside the electric vehicle. In addition, the air-conditioner compressor is driven by one separate drive motor, and therefore power consumption of the electric vehicle is increased, and endurance mileage of the electric vehicle is reduced.

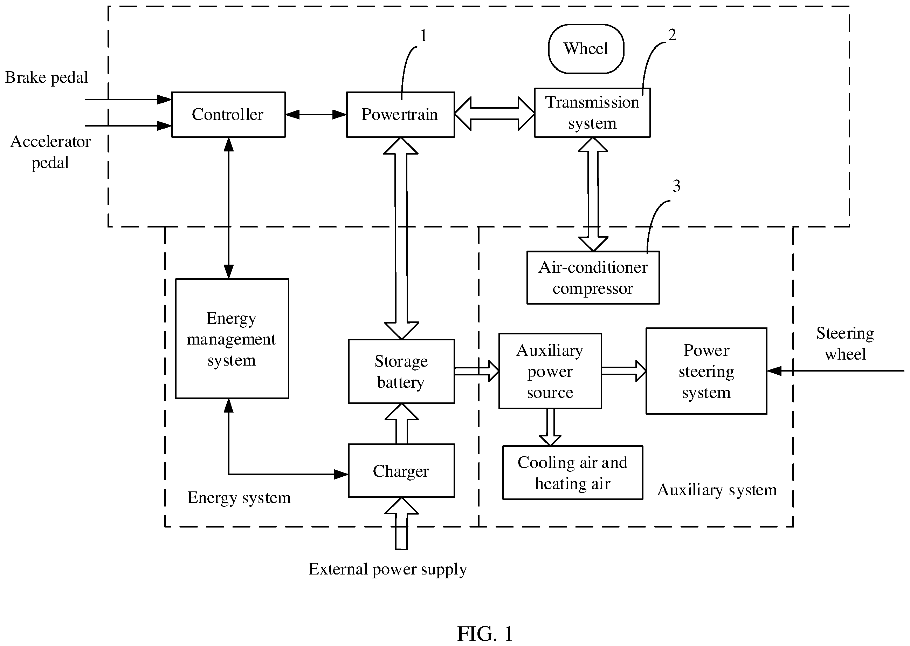

Based on the problems above, an embodiment of this invention provides an electric vehicle drive system. Referring to FIG. 1, the electric vehicle drive system may include a powertrain 1 and a transmission system 2. The powertrain 1 includes a first power output mechanism and a second power output mechanism, the second power output mechanism may be configured to drive an electric vehicle to travel, and the first power output mechanism drives, through the transmission system, an air-conditioner compressor 3 to work. When the powertrain 1 drives the electric vehicle to travel, a part of power of the powertrain 1 is also transmitted to the air-conditioner compressor 3 through the transmission system 2, to drive the air-conditioner compressor to work. In this case, both a power source for traveling of the electric vehicle and a power source of the air-conditioner compressor 3 are the powertrain 1, and therefore no motor needs to be separately disposed for the air-conditioner compressor 3, and no motor configuration space needs to be reserved, thereby reducing a weight of the electric vehicle and costs of the electric vehicle. In addition, this driving manner can also reduce power consumption.

In some embodiments, the powertrain may include a drive motor and a transmission. The transmission is connected to an output shaft of the drive motor, the first power output mechanism may be disposed on the drive motor or the transmission, and the second power output mechanism is connected to an output end of the transmission. The transmission system may include a transmission mechanism and/or at least one connection mechanism. The connection mechanism can be configured as one of an integral shaft, a button, a slide, a one-way clutch, a two-way clutch, or a synchro. The transmission mechanism can be configured as a gear transmission mechanism, a belt transmission mechanism, or a chain transmission mechanism. The transmission is one of a single-speed transmission, a two-speed transmission, or a multi-speed transmission.

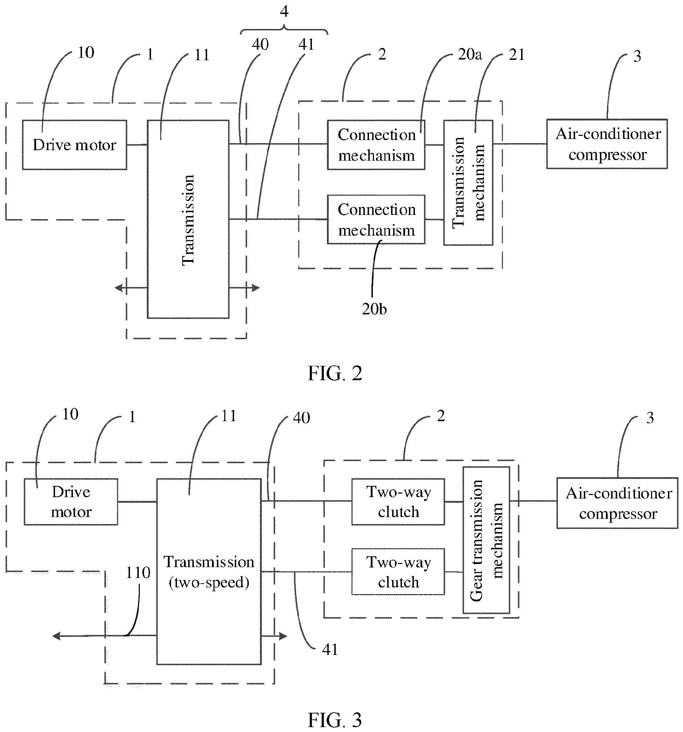

Specifically, referring to FIG. 2, the transmission system 2 may include two connection mechanisms 20a and 20b and one transmission mechanism 21. An output shaft of a drive motor 10 in the powertrain 1 is connected to an input shaft 40 of a transmission 11. A first power output mechanism 4 may be the input shaft 40 and a countershaft 41 of the transmission 11. One end of the connection mechanism 20a is connected to the input shaft 40, and the other end of the connection mechanism 20a is connected to the transmission mechanism 21. One end of the other connection mechanism 20b is connected to the countershaft 41, and the other end of the other connection mechanism 20b is connected to the transmission mechanism 21. The transmission mechanism 21 is configured to be connected to the air-conditioner compressor 3. In this way, when driving the transmission 11, the drive motor 10 can also supply power to the two connection mechanisms through the input shaft 40 and the countershaft 41 of the transmission 11. Because the transmission mechanism 21 is configured to connect the two connection mechanisms to the air-conditioner compressor 3, the air-conditioner compressor 3 is enabled to work.

Referring to FIG. 2 and FIG. 3 together, in the transmission system 2, both the two connection mechanisms 20a and 20b may be two-way clutches, and the transmission mechanism 21 may be a gear transmission mechanism. In this case, the transmission 11 in the powertrain 1 may be a two-speed transmission 11. An input shaft 40 of the two-speed transmission 11 is connected to one two-way clutch, a countershaft 41 of the two-speed transmission 11 is connected to the other two-way clutch, both the two-way clutches are connected to the gear transmission mechanism, and the gear transmission mechanism is connected to the air-conditioner compressor 3.

When the electric vehicle normally travels, the drive motor 10 rotates forward, so that power is transmitted to the two-speed transmission 11 through the input shaft 40 of the two-speed transmission 11, and the power is output to an output axle shaft 110 (the second power output mechanism) of the two-speed transmission 11 through transmission of a gear inside the two-speed transmission 11, to be supplied to the electric vehicle for traveling. If an air conditioner needs to be turned on, and a rotational speed of the drive motor 10 is relatively low and meets a rotational speed requirement of the air-conditioner compressor 3, the two-way clutch connected to the input shaft 40 of the two-speed transmission 11 is engaged, and the two-way clutch connected to the countershaft 41 of the two-speed transmission 11 is disengaged, so that power output by the drive motor 10 drives, through the input shaft 40 of the two-speed transmission 11, the two-way clutch connected to the input shaft 40 to rotate, and the power is transmitted to the air-conditioner compressor 3 through the gear transmission mechanism, to drive the air-conditioner compressor 3 to operate. If an air conditioner needs to be turned on, and a rotational speed of the drive motor 10 is higher than a rotational speed requirement of the air-conditioner compressor 3, the two-way clutch connected to the input shaft 40 of the two-speed transmission 11 is disengaged, and the two-way clutch connected to the countershaft 41 of the two-speed transmission 11 is engaged, so that power output by the drive motor 10 drives, through the countershaft 41 of the two-speed transmission 11, the two-way clutch connected to the countershaft 41 to rotate, and the power is transmitted to the air-conditioner compressor 3 after a transmission rotational speed is reduced through the gear transmission mechanism, to drive the air-conditioner compressor 3 to work.

In addition, when the electric vehicle is in a reverse state, to protect the air-conditioner compressor 3 from reversely rotating, both the two-way clutches are enabled to be in a disengaged state.

When the vehicle is in a parked state, the two-speed transmission 11 is in a neutral gear state. If the air conditioner needs to be turned on, the drive motor 10 rotates forward to drive the input shaft 40 of the two-speed transmission 11 to rotate, the two-way clutch connected to the input shaft 40 is engaged, and the two-way clutch connected to the countershaft 41 of the two-speed transmission 11 is disengaged, so that power output by the drive motor 10 can be transmitted to the air-conditioner compressor 3 through the two-way clutch connected to the input shaft 40.

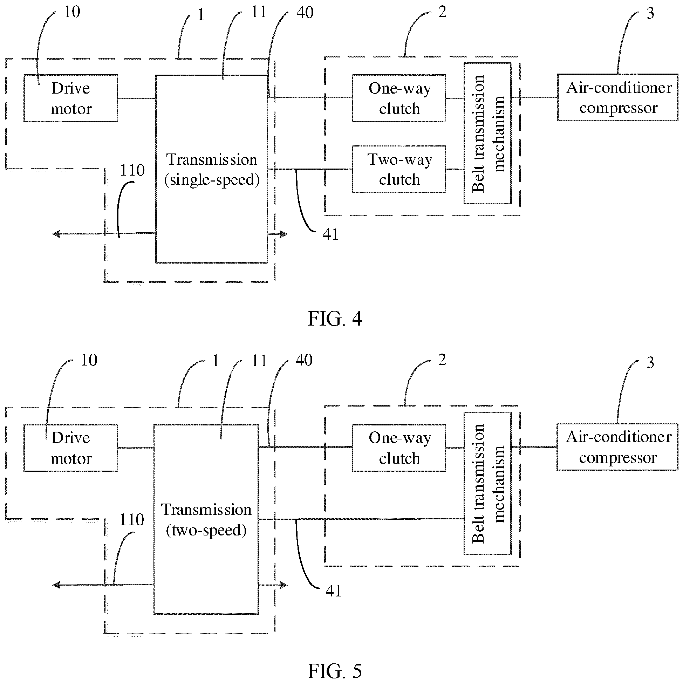

Referring to FIG. 2 and FIG. 4 together, in the foregoing embodiment, in the transmission system 2, the two connection mechanisms 20a and 20b may be respectively a one-way clutch and a two-way clutch, and the transmission mechanism 21 may be a belt transmission mechanism. In this case, the transmission 11 in the powertrain 1 may be a single-speed transmission 11. The one-way clutch is connected to an input shaft 40 of the single-speed transmission 11, the two-way clutch is connected to a countershaft 41 of the single-speed transmission 11, both the one-way clutch and the two-way clutch are connected to the belt transmission mechanism, and the belt transmission mechanism is configured to be connected to the air-conditioner compressor 3.

When the electric vehicle normally travels forward, the drive motor 10 rotates forward, so that power is transmitted to the single-speed transmission 11, and the power is output to an output axle shaft 110 (the second power output mechanism) of the single-speed transmission 11 through transmission of a gear inside the single-speed transmission 11, to drive the electric vehicle to travel forward. If an air conditioner needs to be turned on, the one-way clutch connected to the input shaft 40 of the single-speed transmission 11 is disengaged, and the two-way clutch connected to the countershaft 41 of the single-speed transmission 11 is engaged, so that power output by the drive motor 10 drives, through the countershaft 41 of the single-speed transmission 11, the two-way clutch to rotate, and the power is transmitted to the air-conditioner compressor 3 after a rotational speed is changed through the belt transmission mechanism, to drive the air-conditioner compressor to operate.

When the electric vehicle is in a reverse state, the drive motor 10 reversely rotates, the one-way clutch is engaged, and the two-way clutch connected to the countershaft 41 of the single-speed transmission 11 is disengaged. In this case, the air-conditioner compressor 3 can normally operate. In this way, power output by the drive motor 10 is transmitted to the one-way clutch through the input shaft 40 of the single-speed transmission 11, to drive, through the belt transmission mechanism, the air-conditioner compressor 3 to operate.

When the electric vehicle is in a parked state, if the air conditioner needs to be turned on, the single-speed transmission 11 is in a neutral gear state, the drive motor 10 reversely rotates, the drive motor 10 drives the input shaft 40 of the single-speed transmission 11 to rotate, the one-way clutch connected to the input shaft 40 is in an engaged state, and the two-way clutch connected to the countershaft 41 of the single-speed transmission 11 is disengaged, so that power can be transmitted to the air-conditioner compressor 3 through the one-way clutch and the belt transmission mechanism.

Referring to FIG. 2 and FIG. 5 together, in the foregoing embodiment, alternatively, in the transmission system 2, the two connection mechanisms 20a and 20b may be respectively a one-way clutch and an integral shaft, and the transmission mechanism 21 may be a disconnectable belt transmission mechanism. In this case, the transmission 11 in the powertrain 1 may be a two-speed transmission 11. An input shaft 40 of the two-speed transmission 11 is connected to one end of the one-way clutch, and the other end of the one-way clutch is connected to the belt transmission mechanism. A countershaft 41 of the two-speed transmission 11 is connected to the belt transmission mechanism through the integral shaft, and the belt transmission mechanism is connected to the air-conditioner compressor 3.

When the electric vehicle normally travels forward, the drive motor 10 rotates forward, so that power is transmitted to the two-speed transmission 11, and the power is transmitted to an output axle shaft 110 (the second power output mechanism) of the two-speed transmission 11 through transmission of a gear inside the two-speed transmission 11, to drive the electric vehicle to travel forward. If an air conditioner needs to be turned on, the one-way clutch connected to the input shaft 40 is disengaged, and the belt transmission mechanism is engaged, so that power output by the drive motor 10 is transmitted to the belt transmission mechanism through the countershaft 41 of the two-speed transmission 11 and the integral shaft connected to the countershaft 41, and the power is transmitted to the air-conditioner compressor 3 after a rotational speed is changed through the belt transmission mechanism, to drive the air-conditioner compressor 3 to operate.

When the electric vehicle is in a reverse state, the drive motor 10 reversely rotates. In this case, the one-way clutch connected to the input shaft 40 of the two-speed transmission 11 is engaged, and the belt transmission mechanism is disengaged, so that power of the drive motor 10 is transmitted to the one-way clutch through the input shaft 40 of the two-speed transmission 11, and is transmitted to the air-conditioner compressor 3 through the belt transmission mechanism, to drive the air-conditioner compressor 3 to rotate. In this way, the air-conditioner compressor 3 can normally operate when the electric vehicle is driven in reverse.

When the electric vehicle is in a parked state and the air conditioner needs to be turned on, the two-speed transmission 11 is in a neutral gear, the drive motor 10 reversely rotates, the one-way clutch connected to the input shaft 40 of the two-speed transmission 11 is engaged, and the belt transmission mechanism is disengaged. In this case, the input shaft 40 of the two-speed transmission 11 is driven to rotate, and the input shaft 40 drives the one-way clutch to rotate, so that power can be transmitted to the air-conditioner compressor 3 through the one-way clutch and the belt transmission mechanism, to enable the air-conditioner compressor 3 to operate.

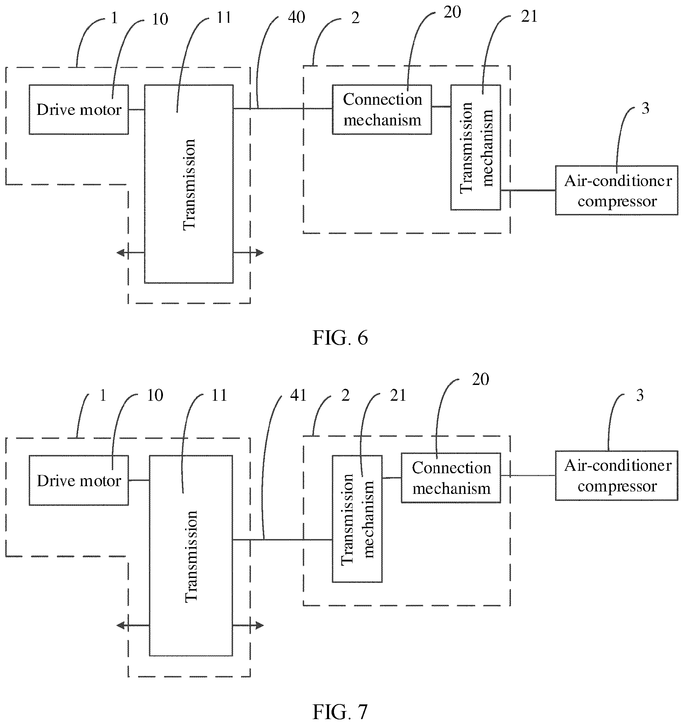

Referring to FIG. 6 and FIG. 7, in some embodiments, the transmission system 2 may alternatively include one connection mechanism 20 and one transmission mechanism 21, and the first power output mechanism may be an input shaft 40 or a countershaft 41 of a transmission 11. Specifically, when one end of the connection mechanism 20 is connected to the input shaft 40 or the countershaft 41, the other end of the connection mechanism 20 is connected to the transmission mechanism 21, and the transmission mechanism 21 is configured to be connected to the air-conditioner compressor 3, to transmit power of a drive motor 10 in the powertrain 1 to the air-conditioner compressor 3 to enable the air-conditioner compressor 3 to work. Alternatively, one end of the transmission mechanism 21 is connected to the input shaft 40 or the countershaft 41, the other end of the transmission mechanism 21 is connected to the connection mechanism 20, and the connection mechanism 20 is configured to be connected to the air-conditioner compressor 3, to transmit power to the air-conditioner compressor 3 to enable the air-conditioner compressor 3 to work.

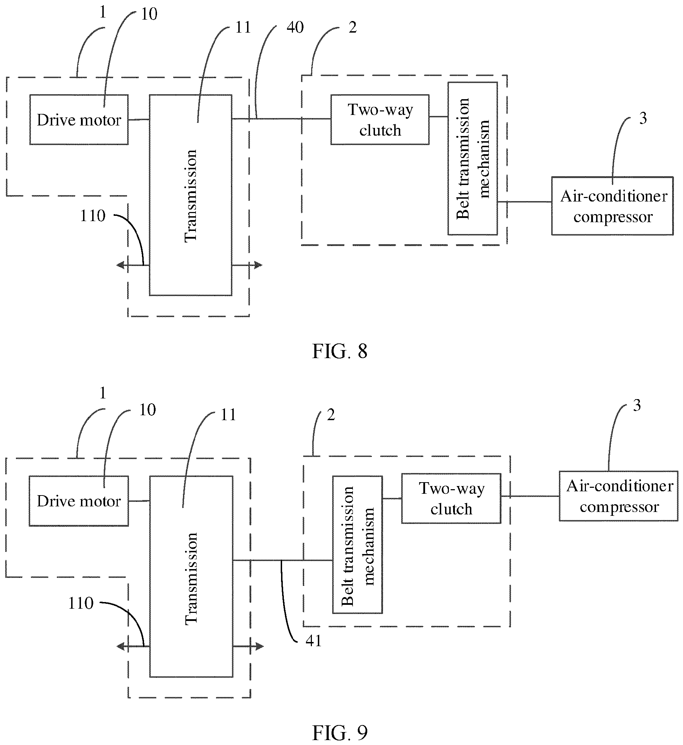

Referring to FIG. 6 and FIG. 8, for example, one end of the connection mechanism 20 is connected to the input shaft 40. In the foregoing embodiment, the connection mechanism 20 may be a two-way clutch, and the transmission mechanism 21 may be a belt transmission mechanism. In this case, the transmission in the powertrain 1 may be a two-speed transmission 11. One end of an input shaft 40 of the two-speed transmission 11 is connected to an output shaft of the drive motor 10, the other end of the input shaft 40 of the two-speed transmission 11 is connected to one end of the two-way clutch, the other end of the two-way clutch is connected to the belt transmission mechanism, and the belt transmission mechanism is connected to the air-conditioner compressor 3.

When the electric vehicle normally travels forward, the drive motor 10 rotates forward, so that power is transmitted to the two-speed transmission 11, and the power is output to an output axle shaft 110 (the second power output mechanism) of the two-speed transmission 11 through transmission of a gear inside the two-speed transmission 11, to be supplied to the electric vehicle for traveling forward. If an air conditioner needs to be turned on, the two-way clutch connected to the input shaft 40 of the two-speed transmission 11 is engaged, so that power output by the drive motor 10 drives, through the input shaft 40 of the two-speed transmission 11, the two-way clutch to rotate, and the power is transmitted to the air-conditioner compressor 3 after a rotational speed is changed through the belt transmission mechanism, to drive the air-conditioner compressor 3 to operate.

When the electric vehicle is in a reverse state, the drive motor 10 reversely rotates. To protect the air-conditioner compressor 3 from reversely rotating, the two-way clutch connected to the two-speed transmission 11 is disengaged.

When the electric vehicle is in a parked state, if the air conditioner needs to be turned on, the two-speed transmission 11 is enabled to be in a neutral gear, the drive motor 10 rotates forward to drive the input shaft of the two-speed transmission 11 to rotate, and the two-way clutch is engaged, so that power of the drive motor 10 can be transmitted to the belt transmission mechanism through the two-way clutch, and then transmitted to the air-conditioner compressor 3.

Referring to FIG. 7 and FIG. 9, for example, one end of the transmission mechanism 21 is connected to the countershaft 41. In the foregoing embodiment, the connection mechanism 20 may be a two-way clutch, and the transmission mechanism 21 may be a belt transmission mechanism. In this case, the transmission 11 in the powertrain 1 may be a single-speed transmission 11. A countershaft 41 of the single-speed transmission 11 is connected to the belt transmission mechanism, and the two-way clutch is configured to connect the belt transmission mechanism to the air-conditioner compressor 3.

When the electric vehicle normally travels forward, the drive motor 10 rotates forward, so that power is transmitted to the single-speed transmission 11, and the power is transmitted to an output axle shaft 110 (the second power output mechanism) of the single-speed transmission 11 through transmission of a gear inside the single-speed transmission 11, to drive the electric vehicle to travel forward. If an air conditioner needs to be turned on, the two-way clutch connected to the belt transmission mechanism is engaged, so that power output by the drive motor 10 is transmitted to the belt transmission mechanism through the countershaft 41 of the single-speed transmission 11, and the power is transmitted to the two-way clutch after a rotational speed is changed through the belt transmission mechanism, to drive the air-conditioner compressor 3 to operate.

When the electric vehicle is in a reverse state, the drive motor 10 reversely rotates. To protect the air-conditioner compressor 3 from reversely rotating, the two-way clutch connected to the belt transmission mechanism needs to be disengaged.

When the electric vehicle is in a parked state, if the air conditioner needs to be turned on, the single-speed transmission 11 is in a neutral gear state, the drive motor 10 rotates forward to drive the countershaft 41 of the single-speed transmission 11 to rotate, and the two-way clutch connected to the belt transmission mechanism is engaged, so that power output by the drive motor is transmitted to the belt transmission mechanism through the countershaft 41 of the single-speed transmission 11, and the power is transmitted to the two-way clutch after a rotational speed is changed through the belt transmission mechanism, to drive the air-conditioner compressor 3 to operate.

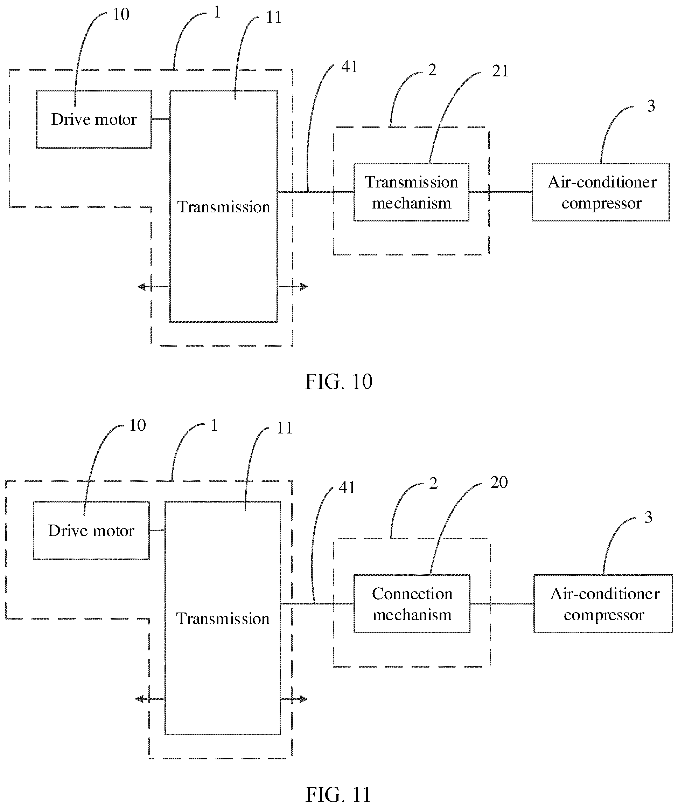

Referring to FIG. 10 and FIG. 11, in some embodiments, the transmission system 2 may alternatively include one connection mechanism 20 or one transmission mechanism 21, and the first power output mechanism may be an input shaft (not shown in the figure) or a countershaft 41 of a transmission 11. Specifically, when the transmission system 2 includes the connection mechanism 20, one end of the connection mechanism 20 may be connected to the input shaft or the countershaft 41, and the other end of the connection mechanism 20 is connected to the air-conditioner compressor 3. When the transmission system 2 includes the transmission mechanism 21, one end of the transmission mechanism 21 is connected to the countershaft 41 of the transmission 11, and the other end of the transmission mechanism 21 is configured to be connected to the air-conditioner compressor 3.

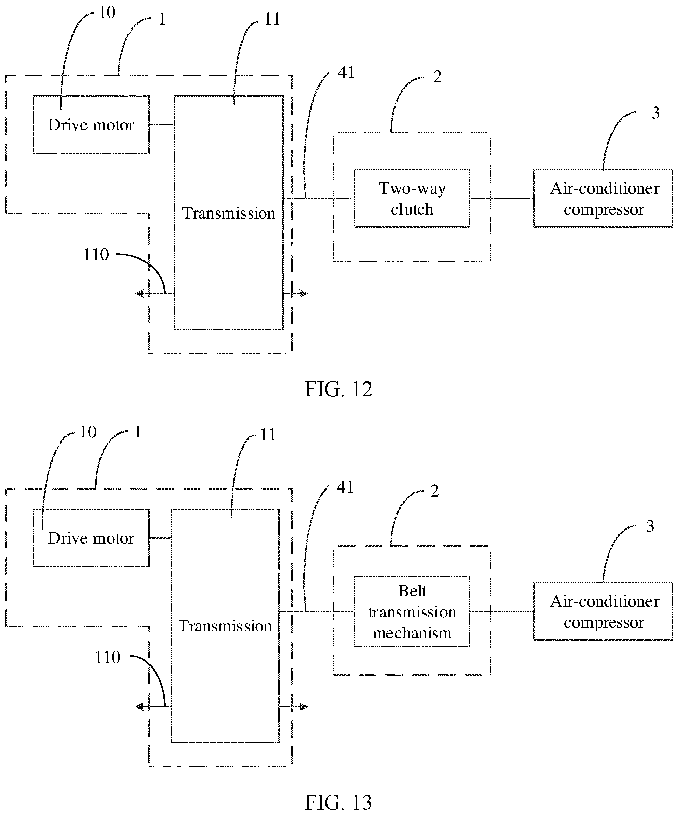

Referring to FIG. 10 and FIG. 12, in the foregoing embodiment, when the transmission system 2 includes the connection mechanism 20, the connection mechanism 20 may be a two-way clutch. In this case, the transmission 11 in the powertrain 1 may be a single-speed transmission 11. One end of the two-way clutch may be connected to an input shaft (not shown in the figure) or a countershaft 41 of the single-speed transmission 11, and the other end of the two-way clutch is configured to be connected to the air-conditioner compressor 3.

When the electric vehicle normally travels forward, the drive motor 10 rotates forward, so that power is transmitted to the single-speed transmission 11, and the power is transmitted to an output axle shaft 110 (the second power output mechanism) of the single-speed transmission 11 through transmission of a gear inside the single-speed transmission 11, to drive the electric vehicle to travel forward. If an air conditioner needs to be turned on, the two-way clutch connected to the countershaft 41 of the single-speed transmission 11 is engaged, so that power output by the drive motor 10 drives, through the countershaft 41 of the single-speed transmission 11, the two-way clutch to rotate, to drive the air-conditioner compressor 3 to operate.

When the electric vehicle is in a reverse state, the drive motor 10 reversely rotates. To protect the air-conditioner compressor 3 from reversely rotating and reduce a loss of the air-conditioner compressor 3, the two-way clutch connected to the countershaft 41 of the single-speed transmission 11 is disengaged.

When the electric vehicle is in a parked state, if the air conditioner needs to be turned on, the single-speed transmission 11 is in a neutral gear state, the drive motor 10 rotates forward, and the two-way clutch connected to the countershaft 41 of the single-speed transmission 11 is engaged, so that power output by the drive motor 10 drives, through the countershaft 41 of the single-speed transmission 11, the two-way clutch to rotate, to drive the air-conditioner compressor 3 to operate.

Referring to FIG. 11 and FIG. 13, in the foregoing embodiment, when the transmission system 2 includes the transmission mechanism 21, and the transmission mechanism 21 may be a disconnectable belt transmission mechanism, the transmission 11 in the powertrain 1 may be a single-speed transmission 11. One end of the belt transmission mechanism may be connected to a countershaft 41 of the single-speed transmission 11, and the other end of the belt transmission mechanism is configured to be connected to the air-conditioner compressor 3.

When the vehicle normally travels forward, the drive motor 10 rotates forward, so that power is transmitted to the single-speed transmission 11, and the power is transmitted to an output axle shaft 110 (the second power output mechanism) of the single-speed transmission 11 through transmission of a gear inside the single-speed transmission 11, to drive the electric vehicle to travel forward. If an air conditioner needs to be turned on, the belt transmission mechanism connected to the countershaft 41 of the single-speed transmission 11 is engaged, so that power output by the drive motor 10 is transmitted to the belt transmission mechanism through the countershaft 41 of the single-speed transmission 11, to drive the air-conditioner compressor 3 connected to the belt transmission mechanism to operate.

When the electric vehicle is in a reverse state, the drive motor 10 reversely rotates. To protect the air-conditioner compressor 3 from reversely rotating and reduce a loss of the air-conditioner compressor 3, the belt transmission mechanism connected to the countershaft 41 of the single-speed transmission 11 is disengaged, so that power cannot be transmitted to the air-conditioner compressor 3. In this case, the air-conditioner compressor 3 does not work.

When the electric vehicle is in a parked state, if the air conditioner needs to be turned on, the single-speed transmission 11 may be enabled to be in a neutral gear state, the drive motor 10 rotates forward to drive the countershaft 41 of the single-speed transmission 11 to rotate, and the belt transmission mechanism connected to the countershaft 41 of the single-speed transmission 11 is engaged, so that power output by the drive motor 10 is transmitted to the belt transmission mechanism through the countershaft 41 of the single-speed transmission 11, to drive the air-conditioner compressor 3 connected to the belt transmission mechanism to operate.

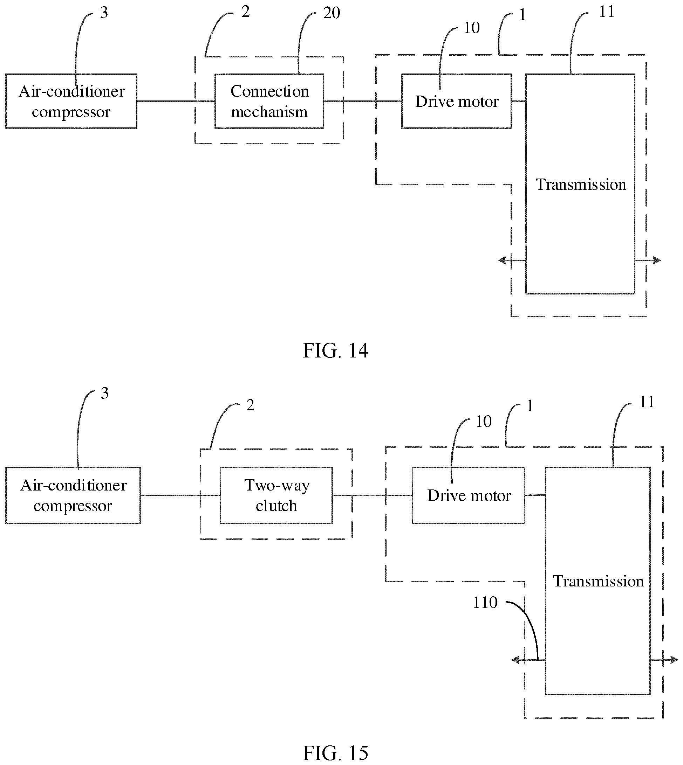

Referring to FIG. 14 and FIG. 15, in some embodiments, a drive motor 10 in the powertrain 1 may be a dual output shaft motor, the transmission system 2 includes one connection mechanism 20, and a transmission 11 may be a two-speed transmission 11. The connection mechanism 20 may be a two-way clutch. One output end of the dual output shaft motor is connected to the transmission 11, and the other output end (the first power output mechanism) of the dual output shaft motor is connected to the two-way clutch. The two-way clutch is configured to be connected to the air-conditioner compressor 3.

When the electric vehicle normally travels forward, the dual output shaft motor rotates forward, so that the output shaft of the dual output shaft motor transmits power to the two-speed transmission 11, and the power is transmitted to an output axle shaft 110 (the second power output mechanism) of the two-speed transmission 11 through transmission of a gear inside the two-speed transmission 11, to drive the electric vehicle to travel forward. If an air conditioner needs to be turned on, the two-way clutch connected to the other output shaft of the dual output shaft motor is engaged, and the other output shaft of the dual output shaft motor drives the two-way clutch to rotate, to drive the air-conditioner compressor 3 to operate.

When the vehicle is in a reverse state, the dual output shaft motor reversely rotates. To protect the air-conditioner compressor 3 from reversely rotating and reduce a loss of the air-conditioner compressor 3, the two-way clutch connected to the other output shaft of the dual output shaft motor is disengaged.

When the vehicle is in a parked state, if the air conditioner needs to be turned on, the two-speed transmission 11 is in a neutral gear state, the two-way clutch connected to the other output shaft of the dual output shaft motor is engaged, and the other output shaft of the dual output shaft motor drives the two-way clutch to rotate, to drive the air-conditioner compressor 3 to operate.

It should be noted that the transmission further includes a neutral gear mechanism, so that the transmission can be in a neutral gear state. When the transmission system includes one connection mechanism or one transmission mechanism and the transmission is a single-speed transmission, the neutral gear mechanism is a synchro disposed on the input shaft, the neutral gear mechanism is a clutch disposed on the countershaft, or the neutral gear mechanism is a clutch or a synchro disposed on the output shaft or a differential assembly.

This invention further provides an electric vehicle. The electric vehicle has the electric vehicle drive system in any one of the foregoing solutions. When driving the electric vehicle to travel, a powertrain in this electric vehicle can also drive an air-conditioner compressor to work, thereby reducing power consumption of the electric vehicle. In addition, no motor needs to be separately disposed for the air-conditioner compressor, thereby saving space inside the electric vehicle.

## Claims

1. An electric vehicle drive system, comprising a powertrain (1) and a transmission system (2), wherein
the powertrain (1) comprises a first power output mechanism (4) and a second power output mechanism, the first power output mechanism (4) is connected to the transmission system (2), and the transmission system (2) is configured to be connected to an air-conditioner compressor (3) in an electric vehicle;
the first power output mechanism (4) is configured to drive, through the transmission system (2), the air-conditioner compressor (3) to work; and
the second power output mechanism is configured to drive the electric vehicle to travel;
**characterized in that** the powertrain (1) further comprises a drive motor and a transmission, the transmission comprises an input shaft (40), a countershaft (41), and an output axle shaft (110) that are in transmission connection, and one end of the input shaft (40) is connected to the drive motor; and the first power output mechanism (4) comprises the input shaft (40) and the countershaft (41), and the second power output mechanism comprises the output axle shaft (110);
the transmission system (2) comprises two connection mechanisms and one transmission mechanism, wherein two ends of one connection mechanism are respectively connected to the other end of the input shaft (40) and the transmission mechanism;
two ends of the other connection mechanism are respectively connected to the countershaft (41) and the transmission mechanism; and
the transmission mechanism is configured to be connected to the air-conditioner compressor (3).

2. The electric vehicle drive system according to claim 1, wherein the connection mechanism can be configured as one of an integral shaft, a button, a slide, a one-way clutch, a two-way clutch, or a synchro; and
the transmission mechanism can be configured as one of a gear transmission mechanism, a belt transmission mechanism, or a chain transmission mechanism.

3. The electric vehicle drive system according to claim 2, wherein both the two connection mechanisms are two-way clutches, and the transmission mechanism is a gear transmission mechanism;
in the two connection mechanisms, the connection mechanism connected to the input shaft (40) is a one-way clutch, and the connection mechanism connected to the countershaft (41) is a two-way clutch; and the transmission mechanism is a belt transmission mechanism; or
in the two connection mechanisms, the connection mechanism connected to the input shaft (40) is a one-way clutch, and the connection mechanism connected to the countershaft (41) is an integral shaft; and the transmission mechanism is a belt transmission mechanism.

4. The electric vehicle drive system according to any one of claims 1 to 3, wherein the transmission is one of a single-speed transmission, a two-speed transmission, or a multi-speed transmission; and
a neutral gear mechanism is disposed on the transmission, and the neutral gear mechanism is disposed on the input shaft (40), the countershaft (41), the output shaft, or a differential assembly in the transmission.

5. An electric vehicle, comprising the electric vehicle drive system according to any one of claims 1 to 4.

## Patentansprüche

1. Antriebssystem für Elektrofahrzeug, umfassend einen Antriebsstrang (1) und ein Getriebesystem (2), wobei
der Antriebsstrang (1) einen ersten Leistungsabgabemechanismus (4) und einen zweiten Leistungsabgabemechanismus umfasst, der erste Leistungsabgabemechanismus (4) mit dem Getriebesystem (2) verbunden ist und das Getriebesystem (2) dazu konfiguriert ist, mit einem Klimaanlagenkompressor (3) in einem Elektrofahrzeug verbunden zu werden;
der erste Leistungsabgabemechanismus (4) dazu konfiguriert ist, über das Getriebesystem (2) den Klimaanlagenkompressor (3) zum Arbeiten anzutreiben; und
der zweite Leistungsabgabemechanismus dazu konfiguriert ist, das Elektrofahrzeug zum Fahren anzutreiben;
**dadurch gekennzeichnet, dass** der Antriebsstrang (1) ferner einen Antriebsmotor und ein Getriebe umfasst, wobei das Getriebe eine Eingangswelle (40), eine Vorgelegewelle (41) und eine Ausgangsachswelle (110) umfasst, die in Getriebeverbindung stehen, und ein Ende der Eingangswelle (40) mit dem Antriebsmotor verbunden ist; und der erste Leistungsabgabemechanismus (4) die Eingangswelle (40) und die Vorgelegewelle (41) umfasst, und der zweite Leistungsabgabemechanismus die Ausgangsachswelle (110) umfasst;
das Getriebesystem (2) zwei Verbindungsmechanismen und einen Getriebemechanismus umfasst, wobei zwei Enden des einen Verbindungsmechanismus jeweils mit dem anderen Ende der Eingangswelle (40) und dem Getriebemechanismus verbunden sind; zwei Enden des anderen Verbindungsmechanismus jeweils mit der Vorgelegewelle (41) und dem Getriebemechanismus verbunden sind;
und
der Getriebemechanismus dazu konfiguriert ist, mit dem Klimaanlagenkompressor (3) verbunden zu werden.

2. Antriebssystem für Elektrofahrzeug gemäß Anspruch 1, wobei der Verbindungsmechanismus als eines von einer einstückigen Welle, einem Knopf, einem Schieber, einer Einwegkupplung, einer Zweiwegkupplung oder einer Synchroneinrichtung konfiguriert werden kann; und
der Getriebemechanismus als einer von einem Zahnradgetriebemechanismus, einem Riemengetriebemechanismus oder einem Kettengetriebemechanismus konfiguriert werden kann.

3. Antriebssystem für Elektrofahrzeug gemäß Anspruch 2, wobei die beiden Verbindungsmechanismen Zweiwegekupplungen sind und der Getriebemechanismus ein Zahnradgetriebemechanismus ist;
bei den beiden Verbindungsmechanismen der mit der Eingangswelle (40) verbundene Verbindungsmechanismus eine Einwegkupplung ist und der mit der Vorgelegewelle (41) verbundene Verbindungsmechanismus eine Zweiwegkupplung ist; und der Getriebemechanismus ein Riemengetriebemechanismus ist; oder
bei den beiden Verbindungsmechanismen der mit der Eingangswelle (40) verbundene Verbindungsmechanismus eine Einwegkupplung ist und der mit der Vorgelegewelle (41) verbundene Verbindungsmechanismus eine einstückige Welle ist; und der Getriebemechanismus ein Riemengetriebemechanismus ist.

4. Antriebssystem für Elektrofahrzeug gemäß einem der Ansprüche 1 bis 3, wobei das Getriebe eines von einem Ein-Gang-Getriebe, einem Zwei-Gang-Getriebe oder einem Mehr-Gang-Getriebe ist; und
ein Neutralgangmechanismus an dem Getriebe angeordnet ist und der Neutralgangmechanismus an der Eingangswelle (40), der Vorgelegewelle (41), der Ausgangswelle oder einer Differenzialbaugruppe in dem Getriebe angeordnet ist.

5. Elektrofahrzeug, umfassend das Antriebssystem für Elektrofahrzeug gemäß einem der Ansprüche 1 bis 4.

## Revendications

1. Système d'entraînement de véhicule électrique, comprenant un groupe motopropulseur (1) et un système de transmission (2), dans lequel
le groupe motopropulseur (1) comprend un premier mécanisme de sortie de puissance (4) et un second mécanisme de sortie de puissance, le premier mécanisme de sortie de puissance (4) est relié au système de transmission (2), et le système de transmission (2) est conçu pour être relié à un compresseur de climatiseur (3) dans un véhicule électrique ;
le premier mécanisme de sortie de puissance (4) est conçu pour amener, par l'intermédiaire du système de transmission (2), le compresseur de climatiseur (3) à fonctionner ; et
le second mécanisme de sortie de puissance est conçu pour amener le véhicule électrique à se déplacer ;
**caractérisé en ce que** le groupe motopropulseur (1) comprend en outre un moteur d'entraînement et une transmission, la transmission comprend un arbre d'entrée (40), un arbre intermédiaire (41) et un arbre d'essieu de sortie (110) qui sont en liaison de transmission, et une extrémité de l'arbre d'entrée (40) est reliée au moteur d'entraînement ; et le premier mécanisme de sortie de puissance (4) comprend l'arbre d'entrée (40) et l'arbre intermédiaire (41), et le second mécanisme de sortie de puissance comprend l'arbre d'essieu de sortie (110) ;
le système de transmission (2) comprend deux mécanismes de connexion et un mécanisme de transmission, dans lequel deux extrémités d'un mécanisme de connexion sont respectivement reliées à l'autre extrémité de l'arbre d'entrée (40) et au mécanisme de transmission ;
deux extrémités de l'autre mécanisme de connexion sont respectivement reliées à l'arbre intermédiaire (41) et au mécanisme de transmission ; et
le mécanisme de transmission est conçu pour être relié au compresseur de climatiseur (3).

2. Système d'entraînement de véhicule électrique selon la revendication 1, dans lequel le mécanisme de connexion peut être conçu comme l'un d'un arbre intégré, d'un bouton, d'une glissière, d'un embrayage unidirectionnel, d'un embrayage bidirectionnel ou d'une synchro ; et
le mécanisme de transmission peut être conçu comme l'un d'un mécanisme de transmission par engrenage, d'un mécanisme de transmission par courroie ou d'un mécanisme de transmission par chaîne.

3. Système d'entraînement de véhicule électrique selon la revendication 2, dans lequel les deux mécanismes de connexion sont des embrayages bidirectionnels, et le mécanisme de transmission est un mécanisme de transmission par engrenage ;
dans les deux mécanismes de connexion, le mécanisme de connexion relié à l'arbre d'entrée (40) est un embrayage unidirectionnel, et le mécanisme de connexion relié à l'arbre intermédiaire (41) est un embrayage bidirectionnel ; et le mécanisme de transmission est un mécanisme de transmission par courroie ; ou
dans les deux mécanismes de connexion, le mécanisme de connexion relié à l'arbre d'entrée (40) est un embrayage unidirectionnel, et le mécanisme de connexion relié à l'arbre intermédiaire (41) est un arbre intégral ; et le mécanisme de transmission est un mécanisme de transmission par courroie.

4. Système d'entraînement de véhicule électrique selon l'une quelconque des revendications 1 à 3, dans lequel la transmission est une transmission à une vitesse, une transmission à deux vitesses ou une transmission à plusieurs vitesses ; et
un mécanisme d'engrenage au point mort est disposé sur la transmission, et le mécanisme d'engrenage au point mort est disposé sur l'arbre d'entrée (40), l'arbre intermédiaire (41), l'arbre de sortie, ou un ensemble différentiel dans la transmission.

5. Véhicule électrique, comprenant le système d'entraînement de véhicule électrique selon l'une quelconque des revendications 1 à 4.
